# EUROPÄISCHE PATENTSCHRIFT

(11) **EP 1 211 487 B1**
(45) Veröffentlichungstag und Bekanntmachung des Hinweises auf die Patenterteilung: **10.03.2010**
(21) Anmeldenummer: 01128027.8
(22) Anmeldetag: 26.11.2001
(51) Int. Cl.: G01F 1/42, G01K 17/16, G05D 7/06

(54) **Vorrichtung für die Messung und Regelung der Verbrauchswerte von Energieträgerflüssigkeiten**
Device for measuring and controlling consumption of heat transferring fluids
Procédé pour la mesure et le contrôle de la consommation des fluides caloporteurs

(30) Priorität: 24.11.2000 DE 10058484
(43) Veröffentlichungstag der Anmeldung: 05.06.2002
(73) Patentinhaber: Rösner, Egon, 21447 Handorf (DE)
(72) Erfinder: Rösner, Egon, 21447 Handorf (DE)
(74) Vertreter: Glaeser, Joachim

(56) Entgegenhaltungen:
- WO-A-00/58802
- DE-U- 20 009 158
- US-A- 5 153 823

## Beschreibung

Die Erfindung betrifft eine Vorrichtung zur Messung und Regelung der individuellen Verbrauchswerte einzelner Verbraucher von Flüssigkeiten als Wärmeträger in wärmetechnischen Anlagen, mit einem Vorlauf und einem Rücklauf von und zu einem Wärmelieferanten, einem Vorlauf und einem Rücklauf zu und von einem Verbraucher, einem Regelteil für die an den Verbraucher gelieferte Menge des Wärmeträgers sowie Messeinrichtungen für die Menge, den Druck und die Temperaturen des Wärmeträgers.

Eine Vorrichtung der eingangs genannten Art ist aus der US 5,153,823 A bekannt, welche ein sog. Drosselorgan verwendet. Gemäß einer Ausführung weist das Drosselorgan ein Gehäuse, das einen Strömungskanal für das Strömungsmedium umschließt, und eine Kreislochblende auf, die im Zuge des Strömungskanals quer zur Strömungsrichtung angeordnet ist. In die Öffnung der Kreislochblende taucht ein Verdrängungskörper ein, wodurch ein Ringspalt gebildet wird, der den wirksamen Querschnitt des Drosselorganes darstellt. Der Verdrängungskörper besteht aus einzelnen zylindrischen Abschnitten mit diskret abgestuften Außendurchmessern, um mehrere verschieden große Ringspalte zu erzeugen und dadurch das Drosselorgan mehrstufig schaltbar auszuführen. Neben anderen Größen wird auch der Druck durch einen externen Sensor erfasst, der als Differenzdrucksensor ausgeführt ist, dessen Komponenten gemäß einer bevorzugten Ausführung zumindest teilweise innerhalb des Verdrängungskörpers angeordnet sind. Bei einer modifizierten Ausführung ist im Inneren des Gehäuses eine konische Fläche ausgebildet, die als Sitz dient, gegen den in der Schließstellung ein am Verdrängungskörper ausgebildeter Teller mit einer ebenfalls konisch geformten Dichtfläche drückt, um in dieser Stelllung einen dichtenden Verschluss zu erzielen und ferner zu erreichen, dass bei geschlossenem Ventil der Differenzdruck am Differenzdrucksensor stets null ist.

Die EP 03 096 643 A1 beschreibt ein Stellglied, dass zur Beeinflussung der Durchflussmenge eines gasförmigen oder flüssigen Mediums vorgesehen ist und ein in einen Schließkörper eingebautes Druckmesselement aufweist, auf das der Differenzdruck zwischen einer Einlasskammer und einer Auslasskammer einwirkt. Der vom Differenzdruck abhängige Abstand zwischen zwei einander gegenüberliegenden Flächen des Druckmesselementes wird mittels eines Magneten und einer Hallsonde in ein elektrisches Signal umgewandelt. Aus dem Öffnungsgrad des Stellgliedes und dem Signal der Druckdifferenz kann die Durchflussmenge bestimmt werden.

Demgegenüber wird von der Erfindung vorgeschlagen eine Vorrichtung zur Messung und Regelung der individuellen Verbrauchswerte einzelner Verbraucher von Flüssigkeiten als Wärmeträger in wärmetechnischen Anlagen, mit einem Vorlauf und einem Rücklauf von und zu einem Wärmelieferanten, einem Vorlauf und einem Rücklauf zu und von einem Verbraucher, einem Regelteil für die an den Verbraucher gelieferte Menge des Wärmeträgers sowie Messeinrichtungen für die Menge, den Druck und die Temperaturen des Wärmeträgers, dadurch gekennzeichnet, dass der Regelteil mit der Messeinrichtung für die Menge des Wärmeträgers zu einem Gerät vereinigt ist, der Regelteil mit einer ringförmigen Düse mit einem im Wesentlichen konischen Durchgang und einem in der Düse verstellbaren Stößel ausgebildet ist, der Stößel zur Düse eichfähig so verstellbar ist, dass sowohl der Druck über eine Kante einer Abstufung am Stößel als auch die Menge des Wärmeträgers über eine Kante im konischen Durchgang der Düse einregelbar sind, der Stößel als längliche Nadel mit der Abstufung und einer kegeligen Spitze ausgebildet ist, der Regelteil im Inneren der mit dem Vorlauf vom Wärmelieferanten und dem Vorlauf zum Verbraucher verbundenen Leistungen der Messeinrichtung angeordnet ist und der Rücklauf vom Verbraucher sowohl mit dem Rücklauf zum Wärmelieferanten als auch mit dem Regelteil verbunden und die gesamte Anordnung derart getroffen ist, dass der Wärmeträger im Rücklauf vom Verbraucher je nach Bedarf in den Regelteil und der verbleibende Rest als Differenz in den Rücklauf zum Wärmelieferanten gelangt.

Durch die Erfindung soll eine erhebliche bauliche Vereinfachung in den o.a. Anlagen erzielt werde, was bei einer Vorrichtung der vorangehend beschriebenen Art dadurch erreicht wird, dass der Regelteil mit der Messeinrichtung für die Menge des Energieträgers zu einem Gerät vereinigt ist, dass in einer ringförmigen Düse mit einem im wesentlichen konischen Durchgang ein eichfähig ausgebildeter und in der Düse eichfähig verstellbarer Stößel angeordnet ist, wobei je nach Position von Stößel und Düse sowohl der Druck über eine Kante am Stößel als auch die Menge des Energieträgers über eine Kante im konischen Durchgang der Düse eichfähig einregelbar sind.

Die Erfindung geht von einer allgemein bekannten Wasserstrahlpumpe oder auch einem Dreiwegeventil aus, jedoch mit einer im Inneren veränderten Ausgestaltung, und zwar mit einer Messkammer und einer Messdüse, welche über zwei unterschiedliche Regelebenen verfügt. Ein Kragen einer Düsennadel regelt gemäß der Erfindung auf der ersten Ebene den Druck und gibt gleichzeitig einen gasdichten Abschluss. Die Düsennadel öffnet oder schließt mit der zweiten, genau kalibrierten Messöffnung der Düse den Durchfluss.

Das eigentliche Messelement besteht aus Messdüse und Düsennadel und ist verschleißfrei. Die Genauigkeit der Messung übertrifft alle bekannten Messverfahren, die derzeit praktiziert werden. Darüber hinaus ist die Regelung der Temperatur und des Druckes sowie die Begrenzung von Temperatur, Druck und Durchfluss möglich. Diese Fähigkeiten werden dem Gerät durch eine elektronische Einheit verliehen, die Transmitter, Regler, Computer, Datenbank und Steuergerät umfasst. Der Transmitter wandelt die Messwerte des Drucks, der Temperatur in spezifische Größen um. Der Computerteil berechnet die Verhältnisse zwischen Temperaturen einerseits und Drücken andererseits. Der ermittelte Verbrauch und Durchfluss werden dauerhaft in der Datenbank generiert. Werte, welche eine Regelabweichung zu den eingestellten Sollwerten darstellen, werden an den Reglerteil übermittelt und als Regelabweichung an das Steuergerät in ein entsprechendes Signal umgewandelt, um das Stellglied zu verstellen. Die Messung mittels Düse und Düsennadel entspricht einer Messung mit einer veränderlichen Venturidüse und erbringt eine Messgenauigkeit über eine Messblende, welche Grundlage für die Eichung des verwendeten Durchflussmessers ist. Durch die Möglichkeit der Programmierung der Messeinheit mit spezifischen Werten und Eigenschaften der betreffenden Flüssigkeit sind Messfehler ausgeschlossen, wie sie in bekannten Verfahren zwangsläufig auftreten.

Die Vorzüge der Erfindung bestehen darin, das keine beweglichen Teile erforderlich sind und ein Einsatz bei sehr hohen Drücken und Temperaturen möglich ist. Regelventile, Druckregler und Durchflussbegrenzer sind überflüssig. Unter Verwendung eines Diffusors werden elektrische Pumpen überflüssig, so dass elektrische Energie gespart wird. Die Anlagen werden übersichtlicher, bedienerfreundlicher und die Störungsanfälligkeit wird eliminiert.

Die Erfindung wird nachstehend anhand der Zeichnung beispielsweise erläutert.
- Fig. 1: zeigt ein Wärmeübergabesystem mit einem Regelteil gemäß der Erfindung.
- Fig. 2: zeigt im vergrößerter Darstellung eine Querschnittsansicht des Regelteils gemäß der Erfindung.

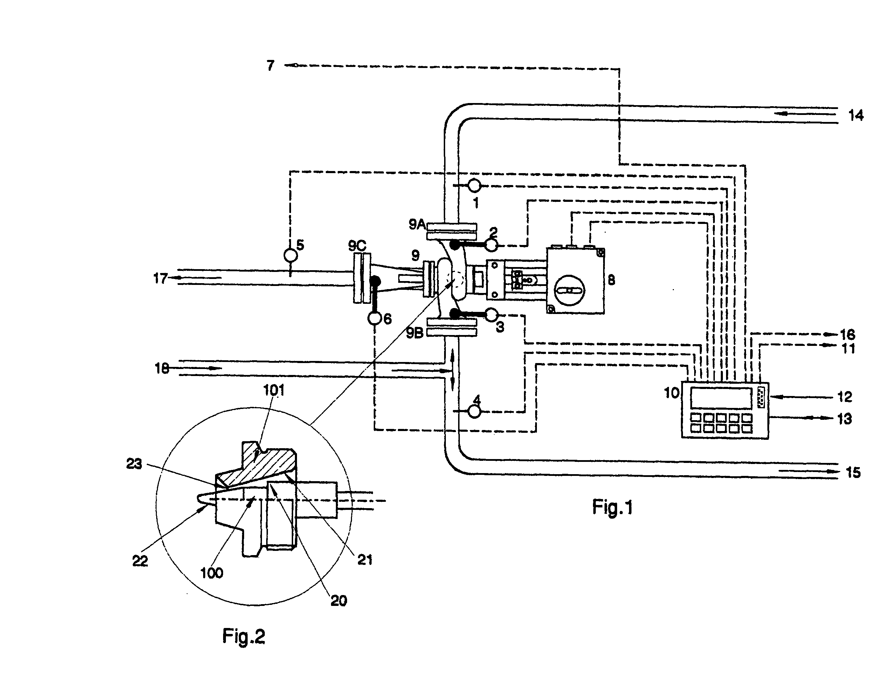

Die eintretende Flüssigkeit der Einspeisung 14 gelangt über einen Anschluss 9A eines Wärmemengenzählers 9 in eine Messdüse (Fig. 2), an welcher durch eine Düsennadel 100 der erforderliche Durchfluss aus dem Hub eines Stellgliedes 8 hergeleitet wird. Die Druckdifferenz von Druckgebern 2 und 3 und der Bedarfswert eines Gebers für Temperatur 5 oder Druck 6 legen die anteilige Beimischung der Flüssigkeit von einem Anschluss 9B an einen Austritt 9C als Vorlauf 17 des Verbrauchers fest. Der Rücklauf 18 vom Verbraucher gelangt je nach Bedarf in den Anschluss 9B und der verbleibende Rest als Differenz in den Rücklauf 15 der Einspeisung.

Die Druckgeber 2 und 3 sorgen für eine ständige Korrektur der Lage der Düsennadel 100 für den Fall, dass der Druck auf der Einspeisungsseite Schwankungen unterworfen ist. Für den Fall, dass eine Druckbegrenzung auf der Seite des Verbrauchers verlangt wird, ist der Druckgeber 6 vorgesehen.

Temperaturgeber 1 und 4 dienen der Wärmemessung. Die Druckgeber 2 und 3 in Verbindung mit dem Stellglied 8 definieren über die Düsenkonstante den effektiven Druckfluss der Einspeisung 14. Aus der gemessenen Temperaturdifferenz und dem gemessenen Durchfluss wird der Wärmeverbrauch errechnet und in einer Datenbank abgelegt.

Der mit einem Prozessor ausgestattene Regler 10 verarbeitet alle Signale der Temperaturen (1, 4, 5, Außentemperaturfühler 7) und der Drücke (2, 3, 6) für den Stellungsgeber des Stellgliedes 8.

Der Regelteil gemäß der Erfindung besteht aus einem ringförmigen Teil oder einer Düse 101 mit einer im Inneren ausgebildeten kegeligen Bohrung. Im Inneren des ringförmigen Teils 101 befindet sich ein Stößel oder eine Nadel 100, die im wesentlichen zylindrisch ausgebildet ist, allerdings mit einer Abstufung 20 und schließlich einem spitz zulaufenden Teil 22.

Durch die Lage der Teile 100 und 101 in Bezug aufeinander werden zwei Regelebenen, nämlich eine Regelebene 21 und eine zweite Regelebene 22 festgelegt sowie eine kalibrierte Messblenden-Düsenöffnung 23.

Der Nadelteil 100 kann in Bezug auf den ringförmigen Teil 101 verstellt werden, so dass auf diese Art und Weise die Durchflussmenge und der Druck in gewünschter Weise eingestellt werden kann.

Am Regler 10 sind drei Ausgänge vorgesehen, und zwar Ausgang
1. für das Auslesen der Datenbank, der errechneten Verbrauchswerte sowie das Löschen überholter Verbrauchswerte aus einem früheren Zeitraumt: Ausgang 12,
2. für die Sollwert-Verstellung durch Telemetrie, Ausgang 16,
3. für das Auslesen der Datenbank und der errechneten Verbrauchswerte durch Telemeterie: Ausgang 11,
4. für die Datenkopplung über die Netzspeisung: Ausgang 13.

Der Stellantrieb 8 kann elektrisch, elektronisch, hydraulisch oder pneumatisch ausgebildet sein. Der Stellungsgeber im Stellantrieb kann induktiv, digital oder mittels Widerstand realisiert werden. Die Ansteuerung des Stellantriebs kann eine 3-Punkt-Regelung oder proportional oder pneumatisch sein.

## Patentansprüche

1. Vorrichtung zur Messung und Regelung der individuellen Verbrauchswerte einzelner Verbraucher von Flüssigkeiten als Wärmeträger in wärmetechnischen Anlagen, mit einem Vorlauf (14) und einem Rücklauf (15) von und zu einem Wärmelieferanten, einem Vorlauf (17) und einem Rücklauf (18) zu und von einem Verbraucher, einem Regelteil (9) für die an den Verbraucher gelieferte Menge des Wärmeträgers sowie Messeinrichtungen für die Menge, den Druck und die Temperaturen des Wärmeträgers,
**dadurch gekennzeichnet, dass**
der Regelteil (9) mit der Messeinrichtung für die Menge des Wärmeträgers zu einem Gerät vereinigt ist,
der Regelteil (9) mit einer ringförmigen Düse (101) mit einem im Wesentlichen konischen Durchgang (21) und einem in der Düse (101) verstellbaren Stößel (100) ausgebildet ist,
der Stößel (100) zur Düse (101) eichfähig so verstellbar ist, dass sowohl der Druck über eine Kante (20) einer Abstufung am Stößel (100) als auch die Menge des Wärmeträgers über eine Kante (23) im konischen Durchgang (21) der Düse (101) einregelbar sind,
der Stößel (100) als längliche Nadel mit der Abstufung und einer kegeligen Spitze (22) ausgebildet ist,
der Regelteil (9) im Inneren der mit dem Vorlauf (14) vom Wärmelieferanten und dem Vorlauf (17) zum Verbraucher verbundenen Leitungen der Messeinrichtung angeordnet ist und
der Rücklauf (18) vom Verbraucher sowohl mit dem Rücklauf (15) zum Wärmelieferanten als auch mit dem Regelteil (9) verbunden und die gesamte Anordnung derart getroffen ist, dass der Wärmeträger im Rücklauf (18) vom Verbraucher je nach Bedarf in den Regelteil (9) und der verbleibende Rest als Differenz in den Rücklauf (15) zum Wärmelieferanten gelangt.

## Claims

1. Device for measuring and controlling the individual consumption of individual consumers of liquids as heat carriers in heat engineering installations, with a run-in (14) and a run-out (15) to and from a heat supply, a run-in (17) and a run-out (18) to and from a consumer, a control element (9) for the amount of heat carrier supplied to the consumer and devices for measuring the amount, the pressure and the temperatures of the heat carrier,
**characterised in that**
the control element (9) is combined with the device for measuring the amount of heat carrier in one device,
the control element (9) is designed to have an annular nozzle (101) with a substantially conical throughput (21) and a plunger (100) which is displaceable in the nozzle (101),
the plunger (100) can be displaced relative to the nozzle (101) by calibration so that the pressure can be adjusted by an edge (20) of a graduation on the plunger (100) and also the amount of heat carrier can be adjusted by an edge (23) in the conical throughput (21) of the nozzle (101),
the plunger (100) is designed as an longitudinal needle with the graduation and a conical tip (22),
the control element (9) is arranged on the inside of lines of the measuring device connected to the run-in (14) of the heat supply and the run-in (17) to the consumer and
the run-out (18) of the consumer is connected both with the run-out (15) to the heat supply and the control element (9), and the entire arrangement is affected in such a way that the heat carrier in the run-out (18) of the consumer, as necessary, reaches the control element (9) and the remaining residue as the difference reaches the run-out (15) to the heat supply.

## Revendications

1. Dispositif de mesure et de réglage des valeurs de consommation individuelles de différents consommateurs de liquides sous forme de fluides caloporteurs dans des installations thermotechniques, comportant une arrivée (14) et un retour (15) venant de et menant vers un fournisseur de chaleur, une arrivée (17) et un retour (18) menant vers et venant d'un consommateur, un élément de réglage (9) de la quantité de fluide caloporteur fournie au consommateur, ainsi que des dispositifs de mesure de la quantité, de la pression et des températures du fluide caloporteur,
**caractérisé en ce que**
l'élément de réglage (9) est réuni au dispositif de mesure de la quantité de caloporteur pour former un appareil,
l'élément de réglage (9) est réalisé avec une buse (101) annulaire, munie d'un passage (21) sensiblement conique, et un poussoir (100) apte à être déplacé dans la buse (101),
le poussoir (100) peut être déplacé par rapport à la buse (101) de manière conforme à l'étalonnage, de telle sorte qu'il est possible de régler la pression sur une arête (20) d'un décrochement sur le poussoir (100), de même que la quantité de fluide caloporteur sur une arête (23) dans le passage (21) de la buse (100),
le poussoir (100) est réalisé sous la forme d'un pointeau allongé, muni du décrochement et d'une pointe (22) conique,
l'élément de réglage (9) est disposé à l'intérieur des conduites du dispositif de mesure, reliées à l'arrivée (14) venant du fournisseur de chaleur et à l'arrivée (17) menant vers le consommateur, et
le retour (18) venant du consommateur est relié au retour (15) menant vers le fournisseur de chaleur, de même qu'à l'élément de réglage (9), et l'ensemble du système est choisi de telle sorte que le fluide caloporteur dans le retour (18) menant vers le consommateur parvient, en fonction des besoins, dans l'élément de réglage (9) et la partie restante en tant que différence parvient dans le retour (15) menant vers le fournisseur de chaleur.
